# DEMANDE DE BREVET EUROPEEN

(11) **EP 2 213 917 A1**
(43) Date de publication de la demande: **04.08.2010**
(21) Numéro de dépôt: 10151313.3
(22) Date de dépôt: 21.01.2010
(51) Int. Cl.: F16K 5/06, F16K 5/10, E03B 7/07

(54) **Vanne sphérique autonettoyante pour circuit d'eau chargée en particules**

(30) Priorité: 03.02.2009 FR 0950673
(71) Demandeur: Naitychia, Jacques, 77400 Pomponne (FR)
(72) Inventeur: Naitychia, Jacques, 77400 Pomponne (FR)
(74) Mandataire: Wagret, Frédéric

(57) **Abrégé**

Vanne à boisseau sphérique située sur une canalisation (3) nécessitant une régulation du débit et transportant une eau chargée de particules (9), pourvue d'un clapet (6) apte à réduire et/ou augmenter la surface d'une section d'écoulement (7) dans le boisseau sphérique (1), est **caractérisée en ce que** le boisseau (1) et le clapet (6) sont aptes à tourner sur eux-mêmes selon un angle de l'ordre de 180°, de sorte que les deux faces (6A et 6B) amont et aval du clapet (6) inversent leurs orientations respectives par rapport au sens du flux d'eau (flèche A) dans ladite canalisation (3).

## Description

La présente invention concerne la régulation du débit des réseaux d'eau en certains points desdits réseaux.

Plus particulièrement, l'invention concerne des organes de réglage, de type vanne, situés sur une canalisation, aptes à réguler le débit d'eau.

Préférentiellement, l'invention concerne des vannes à boisseau sphériques, dites ci-après vannes sphériques.

Un type de réglage du débit dans une canalisation est l'équilibrage d'un réseau de distribution d'eau, particulièrement d'eau chaude sanitaire, qui consiste à répartir rationnellement le débit dans chaque boucle de ce dernier. Une boucle est une canalisation permettant d'assurer une circulation permanente et le maintien en température des canalisations de distribution. L'eau est alors toujours en mouvement.

On connait des vannes sphériques utilisées comme régulateurs de débit d'une canalisation, comprenant un élément ou boisseau de forme sensiblement sphérique comportant un trou traversant, ou canal, sensiblement cylindrique, formant un orifice central, de diamètre sensiblement égal ou égal au diamètre de la canalisation. Ce type vanne est placé sur une section de canalisation. Le boisseau est apte à tourner sur lui-même autour d'un axe de rotation transversal à la direction d'écoulement de l'eau dans la canalisation. Le boisseau tourne sur lui-même, entraîné par un robinet, selon un angle compris entre 0 et 90°. Ainsi, le canal, tourne sur lui-même entre deux positions : une première position où il est aligné avec le flux d'eau et laisse passer toute l'eau et une seconde position où il est perpendiculaire à la direction du flux d'eau, la vanne sphérique bouche alors la canalisation.
Ce système connu ne permet pas un réglage précis du débit d'eau et entraîne une corrosion accélérée de la vanne sphérique par le changement brutal de pression d'eau.

Pour éviter de changer de vanne pour avoir un débit différent dans la canalisation, il est connu, comme décrit dans le brevet européen N° EP0171004, d'équiper une vanne sphérique d'un clapet apte à obturer le trou ou canal traversant sensiblement cylindrique, prévu dans le boisseau. Ledit clapet est associé au robinet de la vanne et traverse le boisseau perpendiculairement au flux d'eau. La distance entre l'extrémité inférieure du clapet et la section transversale interne inférieure dudit canal, déterminant la surface de la section d'écoulement réduite, est réglée au niveau du robinet de la vanne. C'est cette distance qui détermine le débit de l'eau dans la canalisation.

Pour retrouver le débit d'origine avant la fermeture et éviter l'érosion par la cavitation de l'eau, le dispositif décrit dans le brevet européen n°EP0489296 propose un réglage par un clapet de la surface d'écoulement réduite, appelée également « diamètre de passage » dans la vanne, cette surface étant proportionnelle au débit de l'eau dans le canal et la canalisation. Ce réglage et la mobilité du clapet en rotation sur lui-même sont indépendants de la rotation de la vanne sphérique sur elle-même. Le clapet a pour fonction de réguler le débit de manière fine et la vanne sphérique d'obturer complètement si besoin la canalisation. Lorsque que la vanne, après obturation, permet de nouveau le passage de l'eau, le débit retrouve son niveau d'avant obturation très rapidement grâce au clapet.

Dans une installation d'eau chaude sanitaire, lorsque l'alimentation en eau des robinets des sanitaires des consommateurs est interrompue momentanément, l'eau est maintenue, en température et en pression, dans la canalisation d'alimentation en eau desdits robinets, par une circulation permanente dans une canalisation parallèle, appelée boucle ci-après. La boucle fonctionne comme un radiateur. La répartition du débit dans chaque boucle impose d'avoir un organe de réglage, appelé vanne d'équilibrage. Les débits et les excédents de pression à faire chuter nécessitent des diamètres de passage dans ladite vanne d'équilibrage compris entre 0,1 à 2 mm.

Par ailleurs, l'eau qui circule dans les canalisations d'un réseau d'eau chaude sanitaire, ou potable, est chargée de particules de sable, de tartre et/ou issues de la corrosion des canalisations. Ces particules, lorsqu'elles sont de taille supérieure à la surface de la section d'écoulement de ladite vanne sphérique d'équilibrage, sont retenues par le clapet et entraînent le colmatage de la vanne. Les canalisations, notamment les boucles, se refroidissent alors. Ainsi, la température de l'eau dans les canalisations devient favorable au développement des bactéries pathogènes, notamment les bactéries responsables de la légionellose.

Le problème de colmatage, décrit ci-dessus, apparaît de manière plus générale lorsque la vanne sphérique à clapet est située sur une canalisation transportant une eau chargée de particules, la vanne entraînant une diminution conséquente du débit. Les particules colmatent la vanne si leur taille est supérieure à la surface de la section d'écoulement dans le canal du boisseau.

Pour éviter ce colmatage, un nettoyage régulier s'impose. Avec les vannes sphériques, notamment munies de clapets, de l'art antérieur, ce nettoyage est réalisé en démontant la vanne colmatée, entraînant une interruption de l'alimentation en eau du réseau.

Il est connu également d'inverser le sens de circulation de l'eau dans la canalisation pour décrocher les particules du clapet et nettoyer la vanne sphérique par la pression de l'eau. Les vannes de l'art antérieur ne sont pas démontées, mais le nettoyage ainsi réalisé, entraîne une interruption de l'usage de l'eau pour tous les utilisateurs raccordés au réseau.

L'invention remédie aux inconvénients ci-dessus en proposant une configuration de la vanne sphérique la rendant apte à s'auto-nettoyer, sans gène pour l'utilisateur, et de manière simple et rapide.

A cette fin, selon l'invention, la vanne à boisseau sphérique située sur une canalisation nécessitant une régulation du débit et transportant une eau chargée de particules, pourvue d'un clapet apte à réduire et/ou augmenter la surface d'une section d'écoulement dans le boisseau sphérique , est **caractérisée en ce que** le boisseau et le clapet sont aptes à tourner sur eux-mêmes selon un angle de l'ordre de 180°, de sorte que les deux faces amont et aval du clapet inversent leurs orientations respectives par rapport au sens du flux d'eau dans ladite canalisation.

Préférentiellement, ladite vanne est située sur une canalisation choisie parmi le groupe des canalisations de station d'épuration, les canalisations de réseau de distribution d'eau destinées au système d'arrosage ou les canalisations formant une boucle dans un réseau d'eau sanitaire.

Selon un mode réalisation préféré de l'invention, ladite vanne est située dans une boucle dans un réseau d'eau sanitaire, de préférence d'eau chaude, et est destinée à l'équilibrage de ce dernier.

Selon une forme de réalisation avantageuse, ladite vanne est munie d'une poignée, solidaire du boisseau, de sorte que la rotation de la poignée entraîne la rotation simultanée sur eux-mêmes dudit clapet et du boisseau.

Selon une autre forme de réalisation avantageuse, ladite vanne est munie d'un moteur solidaire du boisseau et associé à un moyen de mesure du temps, permettant d'entraîner une rotation automatique simultanée du boisseau et du clapet, à un moment précis et régulièrement.

Plus précisément, l'axe de rotation du clapet est identique à celui du boisseau 1 et celui de la poignée ou de l'entraînement du moteur.

Egalement à cette fin selon l'invention, la méthode de nettoyage d'une vanne à boisseau sphérique située sur une canalisation nécessitant une régulation du débit et transportant une eau chargée de particules, pourvue d'un clapet apte à réduire et/ou augmenter le diamètre de la section d'écoulement dans ledit boisseau est caractérisée en ce qu'elle comprend les étapes suivantes : (i) faire tourner sur eux-mêmes en même temps selon un angle de l'ordre de 180° le boisseau et le clapet (ii) maintenir le sens du flux d'eau de sorte qu'une face amont du clapet, devient, après une rotation sur elle-même selon un angle de l'ordre de 180°, une face aval, de manière à permettre l'évacuation des particules accumulées par la pression de l'eau dans la canalisation.

Préférentiellement, ladite méthode de nettoyage est répétée de manière régulière, de préférence en utilisant une vanne à boisseau sphérique munie d'un moteur associé à un moyen de mesure du temps.

L'invention sera bien comprise à la lumière de la description qui suit, montrant des exemples non limitatifs de formes de réalisation du dispositif de l'invention, et se rapportant aux dessins annexés dans lesquels :
- La figure 1A représente une vue schématique transversale longitudinale d'une canalisation munie d'une vanne à boisseau sphérique selon un premier mode de réalisation de l'invention;
- La figure 1B représente la même vue que la figure 1A, la vanne ayant changé d'orientation par rapport au flux d'eau ;
- La figure 2A représente une vue schématique transversale longitudinale d'une canalisation munie d'une vanne à boisseau sphérique selon un deuxième mode de réalisation de l'invention ;
- La figure 2B représente la même vue que la figure 2A, la vanne ayant changé d'orientation par rapport au flux d'eau ;
- La figure 3 représente le schéma simplifié d'un réseau d'eau chaude sanitaire avec la vanne selon un mode de réalisation préféré de l'invention.

La vanne à boisseau sphérique est décrite ci-après dans le contexte de la réalisation de l'invention dans une boucle d'un réseau d'eau chaude sanitaire. Cependant, l'invention décrite ci-dessous peut être appliquée à tout type de canalisation transportant une eau chargé en particules dont le débit d'eau est régulé par une vanne.

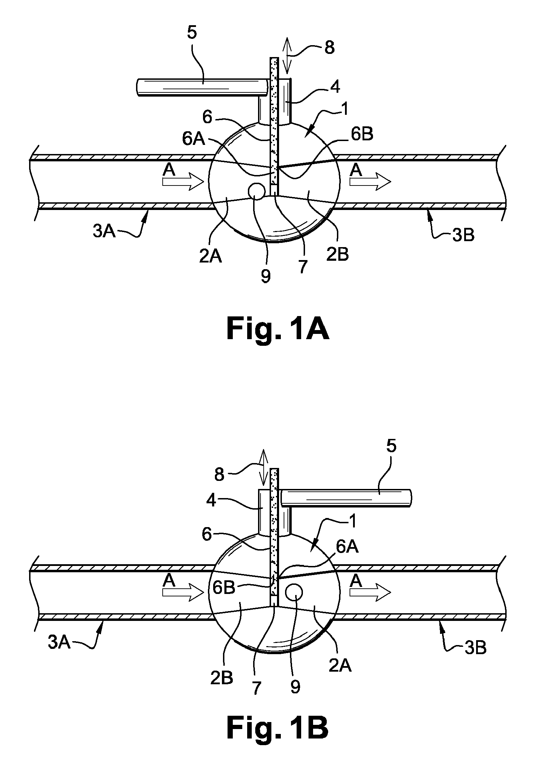

Dans la figure 1A, on a représenté une vanne à boisseau sphérique selon l'invention de façon schématique et en coupe transversale. La vanne comporte un boisseau sphérique 1 lui-même pourvu d'un canal sensiblement cylindrique 2 traversant, et dont les deux extrémités amont 2A et 2B débouchent chacune dans une section de canalisation 3, respectivement amont 3A et aval 3B, d'un réseau de distribution d'eau potable ou sanitaire. Le sens de circulation de l'eau est représenté par la flèche A.

La canalisation 3 est de manière générale une canalisation transportant une eau chargée en particules. La vanne sphérique à boisseau est destinée à régler le débit dans la canalisation 3 par une obturation plus ou moins importante du passage de l'eau dans la canalisation 3 à l'aide du clapet 6.

De manière non limitative, la canalisation 3 peut être comprise dans le groupe des canalisations de station d'épuration, des canalisations de réseau de distribution d'eau pour l'arrosage de terrains privés ou publics, ou de canalisation formant une boucle dans un réseau d'eau chaude sanitaire.

Dans un mode de réalisation préféré de l'invention, la vanne à boisseau sphérique est une vanne d'équilibrage située sur une boucle d'un réseau d'eau chaude sanitaire.

Le boisseau sphérique 1 est mobile en rotation suivant un axe, généralement vertical, transversal à la direction du flux d'eau de manière connue. Le boisseau 1 comporte un robinet 4 dans sa partie supérieure par rapport au sens du flux d'eau (flèche A), apte à entraîner ledit boisseau 1 en rotation sur lui-même, par le biais d'un bras, poignée, levier ou manette 5.

Le canal 2 est susceptible d'être obturé partiellement ou totalement par un clapet 6, connu en lui-même, et constitué d'un volet coulissant suivant un plan transversal à l'écoulement de l'eau et contenant l'axe de rotation x-x du boisseau 1. Le clapet 6 est une tige cylindrique mobile, transversalement par rapport au sens du flux d'eau flèche A, qui vient obstruer le passage dans le canal 2 du boisseau 1. La rotation du boisseau 1 entraîne la rotation concomitante sur lui-même du clapet 6, lorsque la poignée 5 est actionnée. La rotation du clapet 6 sur lui-même selon l'axe x-x n'est pas indépendante de celle du boisseau 1.

Le bord inférieur ou distal du clapet 6 et la paroi interne inférieure du canal 2 délimite, en coupe transversale, une section d'écoulement 7 de l'eau. Cette section est réglable, en forme et surface en fonction de la position du clapet 6. Sur la figure 1A, le clapet 6 est représenté en position d'obturation partielle du canal 2.

La surface de la section d'écoulement réduite 7 d'eau est proportionnelle au débit et à la pression de l'eau. Le clapet 6 est translaté, au niveau du robinet 4, par un moyen de réglage 8, qui peut être notamment une vis de réglage, connue en elle-même.

De préférence, la section d'écoulement 7 réduite dans le canal 2 présente une surface plus ou moins importante en fonction du modèle de vanne à boisseau sphérique choisi et de la régulation de débit nécessaire. La surface de la section d'écoulement 7 d'une vanne sphérique selon l'invention s'exprime par le coefficient de vanne (Kv). Le coefficient de vanne est une valeur nécessaire à l'équilibrage en un point donné dans la canalisation 3. Le coefficient de vanne (Kv) est égal au débit divisé par la racine carré du débit. Par exemple un coefficient de vanne de 0.22 Kv, (orifice de 1 mm dans un modèle de vanne choisi), coefficient adapté aux réseaux d'eau chaude sanitaire, correspond à un débit de 100 litres par heure et une perte de charge de 2 mètres de colonne d'eau.

Lorsque la vanne sphérique, selon l'invention, est utilisée comme vanne d'équilibrage, selon le mode préféré de réalisation de l'invention, le coefficient de vanne (Kv) est compris entre 0,1 et 0,5 Kv.

Le réglage de la surface de cette section d'écoulement réduit 7 permet de réguler le débit et la pression d'eau dans la canalisation 3.

Dans la figure 1A, on a représenté une accumulation de débris, particules, etc., susceptible de constituer un colmatage du canal 2 et donc de la vanne à boisseau sphérique 1, par un cercle noir 9. Les particules 9 sont accumulées et retenues par une face amont 6A du clapet 6 et forment un colmatage. Plus la surface de la section d'écoulement réduit 7 est faible, plus le colmatage est rapide.

Les particules 9 provoquant le colmatage ont en général une taille inférieure ou égale à la surface de la section d'écoulement 7.

La face 6A du clapet 6, orientée vers l'amont de la canalisation 3, fait face au sens du flux d'eau. La face 6B, orientée vers l'aval, et la section d'écoulement réduit 7 subissent la pression du flux d'eau.

Les particules 9 sont poussées par le flux d'eau contre la face 6A et retenues par le clapet 6. Au fur et à mesure qu'elles sont poussées vers le clapet 6, les particules 9 colmatent partiellement à complètement la section d'écoulement réduite 7 si leur taille est supérieure ou égale à la surface de cette dernière, qui diminue sous l'effet du colmatage.

La figure 1B représente la vanne sphérique de la figure 1A selon une autre configuration de l'ensemble formé par le boisseau 1, le robinet 4, et le clapet 6. Ces éléments ont subi une rotation sur eux-mêmes selon un angle de l'ordre de 180°.

La face amont 6A est maintenant orientée vers l'aval dans le sens de l'écoulement d'eau. La pression de l'eau entraîne les particules de colmatage 9 dans le flux d'eau, ces dernières se détachent de la face 6A Cette dernière est nettoyée par la pression de l'eau du fait de son orientation dans le flux d'eau.

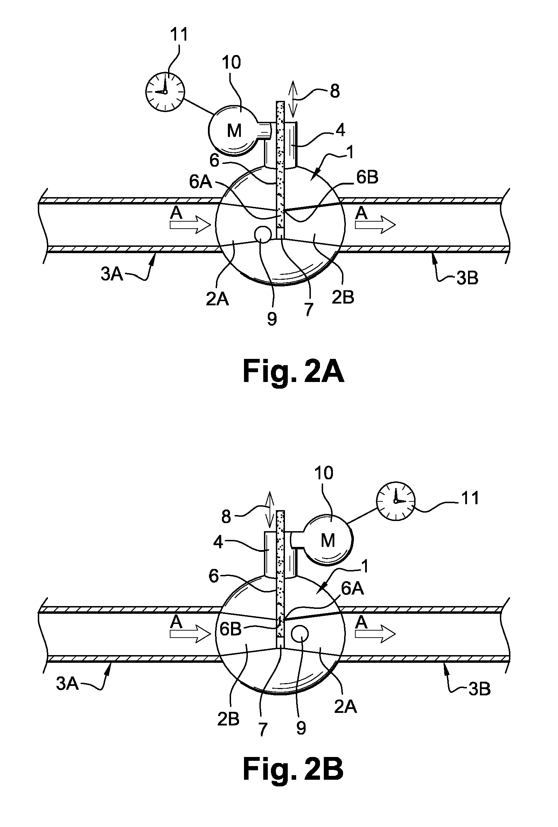

La figure 2A est la même représentation de la vanne sphérique, selon l'invention, que la figure 1A dans un mode de réalisation différent.

La figure 2B est la même représentation de ladite vanne sphérique que la figure 1B dans un mode de réalisation différent. Le boisseau 1 et le clapet 6 de ladite vanne ont subit une rotation sur eux-mêmes de l'ordre de 180°.

La figure 2A et la figure 2B diffèrent de la figure 1A et la figure 1B en ce qu'elles illustrent un moteur 10 à la place de la poignée 5. Le moteur 10 est associé à un moyen de mesure du temps, de préférence une horloge 11.

La rotation sur eux-mêmes du boisseau 1 et du clapet 6 est motorisée et automatisée selon le mode de réalisation illustré dans les figures 2A et 2B.

Les figures 2A et 2B représentent un auto-nettoyage régulier de la vanne sphérique 1 par actions répétées du moteur 10 sur la rotation sur eux-mêmes du boisseau 1 et du clapet 6 à intervalles réguliers à un moment précis contrôlé par l'horloge 11.

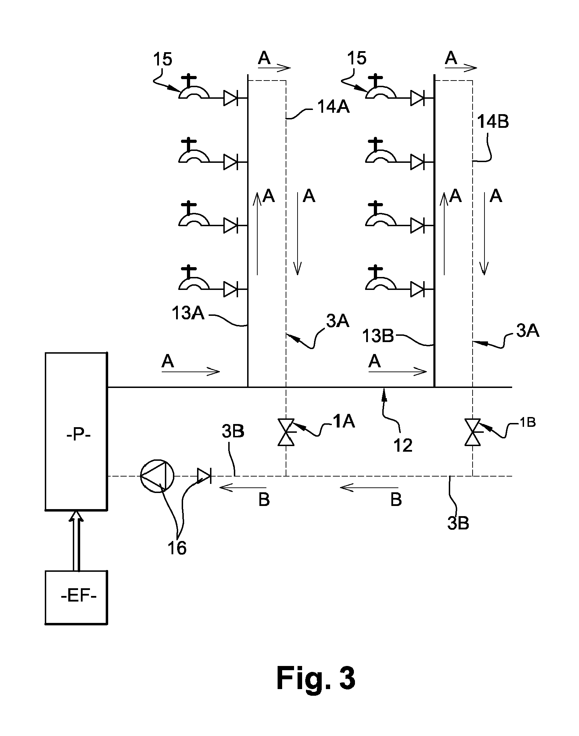

La figure 3 représente, à titre d'exemple, un réseau de distribution 12 d'eau chaude sanitaire avec deux colonnes 13A et 13B d'alimentation selon un mode de réalisation préféré de l'invention à titre d'exemple.

Les colonnes 13A et 13B présentent chacune une boucle 14A ou 14B qui permet d'équilibrer le réseau 12 en régulant le débit.

Dans un mode préféré de réalisation de l'invention, des vannes sphériques, selon l'invention, 1A et 1 B telles que représentées dans les figures 1A, 1B, 2A et 2B, se situent sur une canalisation 3 constituant respectivement des boucles 14A et 14B, entre deux sections 3A et 3B de cette dernière. Le sens du flux d'eau dans les boucles 14A et 14B est celui selon la flèche A.

Le bloc P représente un module de production d'eau chaude, de type connu. L'eau chaude produite est injectée, selon le sens du flux d'eau flèche A, dans le réseau de distribution 12 et détermine le sens de circulation de l'eau flèche A dans les boucles 14A et 14B.

Le bloc EF représente le réseau d'eau d'alimentation générale de plusieurs réseaux de distribution tels que le réseau 12.

Lorsque les robinets 15 des sanitaires alimentés en eau par le réseau 12 sont fermés, l'eau circule, à débit réduit par rapport au débit d'utilisation normale, dans les boucles 14A et 14B. Les vannes à boisseau sphérique 1 A et 1 B régulent le débit respectivement dans les boucles 14A et 14B et permettent le maintient de température et de pression de l'eau au niveau des robinets 15.

Lorsque les vannes sphériques 1A et 1 B sont entraînées en rotation sur elles-mêmes de 180° afin d'être nettoyées, les particules 9 se détachent du clapet 6 et sont acheminées par le flux d'eau flèche B vers un moyen de filtrage 16 comprenant une pompe, une vanne et un filtre (représentés par des symboles) qui redirigent les particules 9 vers un réceptacle (non représenté) et l'eau filtrée vers le bloc P.

Une fois le boisseau 1 et le clapet 6 tournés sur eux-mêmes selon un angle de l'ordre de 180°, la vanne sphérique selon l'invention reprend sa fonction d'organe régulateur du débit dans la boucle 14 sans interruption du flux d'eau. Les particules 9 s'accumulent alors sur la face 6B du clapet 6 passée de l'aval à l'amont. Le boisseau 1 et le clapet 6 sont alors tournés sur eux-mêmes une nouvelle fois selon un angle de 180° au bout d'un temps déterminé par la vitesse de colmatage de sorte que le colmatage de la vanne soit évité.

Dans un mode préféré de réalisation, la rotation sur eux-mêmes de 180° du boisseau 1 et du clapet 6 est motorisée, automatisée et réglée par le moyen de mesure du temps 11. La fréquence de la rotation est calculée en fonction de la vitesse de colmatage.

Ainsi la vanne sphérique 1 selon l'invention est nettoyée sans avoir été démontée et sans nécessiter l'interruption de l'alimentation des robinets 15.

### LEGENDE

- 1: Boisseau sphérique
- 2: Canal du boisseau
- 3: Canalisation
- 4: Robinet vanne
- 5: Bras ou poignée
- 6: Clapet
- 7: Section d'écoulement
- 8: Moyen de réglage du clapet
- 9: Particules, amas de particules
- 10: Moteur
- 11: Moyen de mesure du temps
- 12: Réseau de distribution d'eau
- 13: Colonne d'alimentation de sanitaires
- 14: Bouclage
- 15: Robinet de sanitaire
- 16: Moyen de filtrage des particules
- Flèche A: Sens de circulation de l'eau dans le réseau ou sens du flux d'eau dans la canalisation
- Flèche B: Sens de circulation de l'eau chargée de particules vers le moyen de filtrage

## Revendications

1. Vanne à boisseau sphérique située sur une canalisation (3) nécessitant une régulation du débit et transportant une eau chargée de particules (9), pourvue d'un clapet (6) monté mobile dans ledit boisseau (1) de façon à permettre de réduire et/ou augmenter la surface d'une section d'écoulement (7) dans le boisseau sphérique (1), **caractérisée en ce qu'**elle permet la circulation du fluide dans les deux sens suivant l'axe de la canalisation, et **en ce que** le boisseau (1) et le clapet (6) sont aptes à tourner sur eux-mêmes ensemble selon un angle de l'ordre de 180°, de sorte que les deux faces (6A et 6B) amont et aval du clapet (6) inversent leurs orientations respectives par rapport au sens du flux d'eau (flèche A) dans ladite canalisation (3), de manière a permettre d'évacuer les éventuels débits (9), résidus ou équivalents, présents en amont du clapet (6) dans le sens de l'écoulement (A).

2. Vanne selon la revendication 1, **caractérisée en ce que** ladite vanne est munie d'une poignée (5), solidaire du boisseau (1), de sorte que la rotation de la poignée (5) entraîne la rotation simultanée sur eux-mêmes dudit clapet (6) et du boisseau (1).

3. Vanne selon l'une des revendications 1 ou 2, **caractérisée en ce** ladite vanne est munie d'un moteur (10) solidaire du boisseau (1) et associé à un moyen de mesure du temps (11), permettant d'entraîner une rotation automatique simultanée du boisseau (1) et du clapet (6), à un moment précis et régulièrement.

4. Vanne selon les revendications 2 et 3, **caractérisée en ce que** l'axe de rotation du clapet (6) est commun avec celui du boisseau (1) et celui de la poignée (5) ou de l'entraînement du moteur (10).

5. Vanne selon l'une des revendications 1 à 4, **caractérisée en ce qu'**elle est située sur une canalisation choisie parmi le groupe des canalisations de station d'épuration, les canalisations de réseau de distribution d'eau destinées au système d'arrosage ou les canalisations formant une boucle dans un réseau d'eau sanitaire.

6. Vanne selon la revendication 5, **caractérisée en ce qu'**elle est située dans une boucle dans un réseau d'eau sanitaire, de préférence d'eau chaude, et est destinée à l'équilibrage de ce dernier.

7. Méthode de nettoyage d'une vanne à boisseau sphérique située sur une canalisation (3) nécessitant une régulation du débit et transportant une eau chargée de particules (9), pourvue d'un clapet (6) apte à réduire et/ou augmenter le diamètre de la section d'écoulement (7) dans ledit boisseau (1), **caractérisée en ce qu'**elle comprend les étapes suivantes : (i) faire tourner sur eux-mêmes en même temps selon un angle de l'ordre de 180° le boisseau (1) et le clapet (6), (ii) maintenir le sens du flux d'eau de sorte qu'une face amont (6A) du clapet, devient, après une rotation sur elle-même selon un angle de l'ordre de 180°, une face aval, de manière à permettre l'évacuation des particules (9) accumulées par la pression de l'eau dans la canalisation (3).

8. Méthode de nettoyage selon la revendication 7, **caractérisée en ce qu'**elle est répétée de manière régulière, en utilisant une vanne à boisseau sphérique selon la revendication 3.
